# FASCICULE DE BREVET EUROPEEN

(11) **EP 4 608 688 B1**
(45) Date de publication et mention de la délivrance du brevet: **26.08.2026**
(21) Numéro de dépôt: 23783922.0
(22) Date de dépôt: 09.10.2023
(51) Int. Cl.: B60T 1/00, B60T 1/06, F16D 63/00

(54) **DISPOSITIF DE SERRAGE POUR UN SYSTÈME DE FREINAGE AVEC MOYENS DE BLOCAGE INTÉGRÉS**
KLEMMVORRICHTUNG FÜR EIN BREMSSYSTEM MIT INTEGRIERTER SPERRMITTEL
CLAMPING DEVICE FOR A BRAKE SYSTEM WITH INTEGRATED LOCKING MEANS

(30) Priorité: 26.10.2022 FR 2211116
(43) Date de publication de la demande: 03.09.2025
(73) Titulaire: Astemo France, 93700 Drancy (FR)
(72) Inventeur: BOURLON, Philippe, 77230 Dammartin en Goele (FR)
(74) Mandataire: LLR
(86) Numéro de dépôt international: PCT/EP2023/077856
(87) Numéro de publication internationale: WO 2024/088737

(56) Documents cités:
- EP-A1- 0 627 348
- US-A- 6 125 983
- US-B1- 6 725 962
- US-B1- 7 669 686

## Description

L'invention se rapporte au domaine des systèmes de freinage pour véhicule, plus particulièrement des systèmes de freinage du type électromécanique et non autobloquants.

Un système de freinage d'un véhicule, notamment automobile, comporte en général des dispositifs mécaniques de serrage comprenant notamment des éléments de friction, tels que des plaquettes de frein. Ces éléments de friction sont reliés à un actionneur apte à rapprocher une paire de ces éléments de friction en direction de deux faces opposées d'un disque solidaire d'une roue du véhicule. Ce rapprochement permet aux éléments de friction d'enserrer le disque et ainsi freiner le véhicule par friction des éléments de friction contre le disque, ou de les écarter dans le but de cesser le freinage.

Dans le cas des systèmes de freinage du type électromécanique, les dispositifs mécaniques de serrage comportent au moins un actionneur électrique tel qu'un moteur électrique muni d'un arbre de sortie rotatif. L'actionnement de ce moteur électrique permet à la fois d'effectuer le freinage du véhicule en cours de roulement, mais assure également la fonction de frein de parking lorsque le véhicule est maintenu immobile à l'arrêt, durant des périodes pouvant être très longue. En d'autres termes, contrairement aux systèmes de freinage classique où le frein de parking est assuré par un système ad hoc, il est nécessaire que ces systèmes de freinage permettent de conserver la force de serrage exercée par les éléments de friction contre le disque pour garantir un frein de parking efficace et fiable. Pour ce faire, il existe actuellement des systèmes de freinage du type électromécanique dits « autobloquants » mais ces systèmes sont complexes à mettre en œuvre et se révèlent généralement onéreux. Alternativement, il existe des systèmes de freinage du type électromécanique dits « non autobloquants » pour lequel le moteur électrique est du type réversible. Autrement dit, la rotation du moteur électrique dans un premier sens induit *in fine* l'enserrement du disque par les éléments de friction, tandis que l'actionnement de ce même moteur électrique dans le sens de rotation inverse induit *in fine* le desserrement du disque par les éléments de friction. Afin d'assurer le blocage nécessaire des moyens des frictions lorsque la fonction de frein de parking est requise, il est connu, pour ces systèmes non autobloquants, d'ajouter un deuxième moteur électrique, ayant sa propre chaine cinétique, dont le but est d'effectuer le serrage du frein de parking. Cependant, l'ajout d'un tel second moteur est encombrant, augmentant ainsi l'espace nécessaire au dispositif de freinage électromagnétique au sein du véhicule, ce qui est contraire aux problématiques actuelles des constructeurs automobile qui cherchent à optimiser le moindre espace des véhicules. Outre son encombrement, un tel dispositif est plus onéreux et complexe à mettre en œuvre, tant dans les connexions électriques nécessaires entre ses différents éléments et l'unité de commande électronique, que dans le pilotage des deux moteurs par cette dernière. Le document US7669686B1 décrit un cliquet de verrouillage de stationnement conventionnel pour un ATV actionné par le tambour de changement de vitesse de la boîte de vitesses.

L'invention a notamment pour but de remédier à l'ensemble des inconvénients susmentionnés, en proposant un dispositif de serrage pour un système de freinage qui soit à la fois compact, simple à mettre en œuvre et peu cher.

A cet effet l'invention a pour objet un dispositif de serrage pour un système de freinage destiné à exercer un déplacement relatif entre des éléments de friction dudit système de freinage, le dispositif de serrage comprenant :
- un premier actionneur de type moteur électrique comprenant un rotor et destiné à fournir une force de serrage aux éléments de friction par rotation du rotor,
- un système de blocage en rotation du rotor, caractérisé en ce que le système de blocage comprend :
   - des premiers moyens de blocage et des deuxièmes moyens de blocage de forme complémentaire, les premiers moyens de blocage étant situés sur la surface extérieure du rotor et les deuxièmes moyens de blocage étant situés en regard du rotor,
   - un deuxième actionneur de type moteur électrique configuré pour exercer un déplacement relatif entre les premiers moyens de blocage et les deuxièmes moyens de blocage de sorte qu'ils coopèrent les uns avec les autres afin de bloquer le rotor en rotation.

Ainsi, grâce au positionnement rapproché des deux actionneurs de type électrique (aussi communément nommés « moteurs électriques ») du dispositif de l'invention et de l'action indirecte bloquante du deuxième actionneur sur le premier actionneur, il est possible d'assurer le blocage des éléments de frictions dans une position d'enserrement du disque tout en ayant un dispositif de serrage compact et simple à mettre en œuvre. La fonction de frein de parking peut donc être assurée sans que l'espace nécessaire au sein du véhicule ne soit impacté outre mesure puisque l'ensemble du système de blocage en rotation du rotor peut se situer au plus proche du premier actionneur électrique. En outre, compte tenu de cette proximité, le couple nécessaire pour permettre le blocage en rotation du rotor du premier actionneur électrique ne nécessite pas d'être très important, ce qui permet l'utilisation d'un deuxième actionneur de plus petite dimension et aux caractéristiques (puissance, intensité d'utilisation) moins grandes. Ainsi, l'espace nécessaire à l'ensemble du dispositif s'en trouve réduit.

La complémentarité des formes des premiers moyens de blocage et des deuxièmes moyens de blocage permet leur coopération lorsqu'ils sont mis en contact les uns vers les autres, sous l'action du déplacement relatif engendré par le deuxième actionneur. Par coopération, on entend un assemblage solidaire et réversible entre les premiers moyens de blocage et les deuxièmes moyens de blocage de sorte à bloquer toute rotation du rotor du premier actionneur. En outre et lorsque le mouvement du véhicule est de nouveau requis, la coopération entre les premiers moyens et les deuxièmes moyens doit pouvoir être défaite. Une telle alternance entre assemblage et désassemblage des premiers et deuxièmes moyens de blocage doit pouvoir être répétée dans le temps de manière fiable. Pour ce faire, tout moyens de blocage connus de l'homme du métier répondant aux critères précités peut être envisagé. A titre d'exemples non limitatifs, il peut s'agir d'une coopération entre : un ergot et un orifice destiné à accueillir l'ergot, deux tenons, un tenon et une rainure, un tenon et une mortaise, des dents, une rainure et une languette, *etc.*

Avantageusement, le premier actionneur fournit une force de serrage aux éléments de friction par rotation du rotor selon un premier sens de rotation, le système de blocage bloquant la rotation du rotor dans un second sens de rotation, opposé au premier sens de rotation.

Afin de permettre une meilleure réactivité dans le blocage en rotation du rotor du premier actionneur, le système de blocage comprend en outre une crémaillère comprenant sur une de ses faces en regard du rotor les deuxièmes moyens de blocage.

Afin de permettre une flexibilité du dispositif, le système de blocage comprend en outre deux butées en regard l'une de l'autre, la crémaillère étant montée mobile entre les deux butées.

Avantageusement, le système de blocage comprend en outre une came, en contact avec la crémaillère, configurée pour permettre un premier mouvement relatif de la crémaillère par rapport au rotor du premier actionneur, la came étant mise en rotation par le deuxième actionneur.

Afin de garantir une répétabilité du dispositif de serrage, le dispositif comprend des moyens de rappel de la crémaillère configurés pour permettre un deuxième mouvement relatif de la crémaillère par rapport au rotor du premier actionneur de sens opposé au premier mouvement relatif.

Avantageusement, les premiers moyens de blocage et les deuxièmes moyens de blocage comprennent des dents de forme complémentaire.

Afin de permettre une grande réactivité dans le blocage en rotation du rotor du premier actionneur, les premiers moyens de blocage sont répartis radialement sur tout ou partie de la circonférence de la surface extérieure du rotor, de préférence sur toute la circonférence de la surface extérieure du rotor.

Avantageusement, le premier actionneur et/ou le deuxième actionneur est un moteur à courant continu sans balais.

L'invention se rapporte également à un système de freinage comprenant un dispositif de serrage selon l'une quelconques des variantes précédentes, une unité de commande électronique et un boitier, le premier actionneur, le deuxième actionneur et l'unité de commande électronique étant situés au sein du boitier.

L'invention se rapporte également à un procédé de freinage pour un dispositif de serrage selon l'une quelconque des variantes précédentes, le procédé de freinage comprenant les étapes suivantes :
- mise sous tension du premier actionneur, le rotor du premier actionneur étant mobile en rotation de sorte à fournir une force de serrage aux éléments de friction,
- réduction de la vitesse de rotation du rotor,
- mise sous tension du deuxième actionneur pour exercer un déplacement relatif entre les premiers moyens de blocage et les deuxièmes moyens de blocage de sorte qu'ils coopèrent les uns avec les autres afin de bloquer le rotor en rotation,
- mise hors tension des deux actionneurs.

Avantageusement, le deuxième actionneur a une vitesse de rotation comprise entre 1 et 2 tr/min.

Avantageusement, la mise sous tension du deuxième actionneur engendre la mise en rotation de la came jusqu'à ce que les dents réparties sur la crémaillère entrent en contact avec les dents réparties radialement sur la surface extérieure du rotor du premier actionneur.

### Brève description des figures

L'invention sera mieux comprise à la lecture de la description qui va suivre donnée uniquement à titre d'exemple et faite en se référant aux dessins annexés dans lesquels :
[Fig.1] la [Fig.1] est une vue schématique illustrant un mode de réalisation du dispositif selon l'invention,
[Fig.2] la [Fig.2] est une vue schématique illustrant une variante de réalisation du mode de réalisation illustré à la [Fig.1],
[Fig.3] la [Fig.3] est un ensemble de vues schématiques (figure 3a, 3b et 3b) illustrant le fonctionnement du dispositif selon le mode de réalisation illustré à la [Fig.1].

### Description détaillée

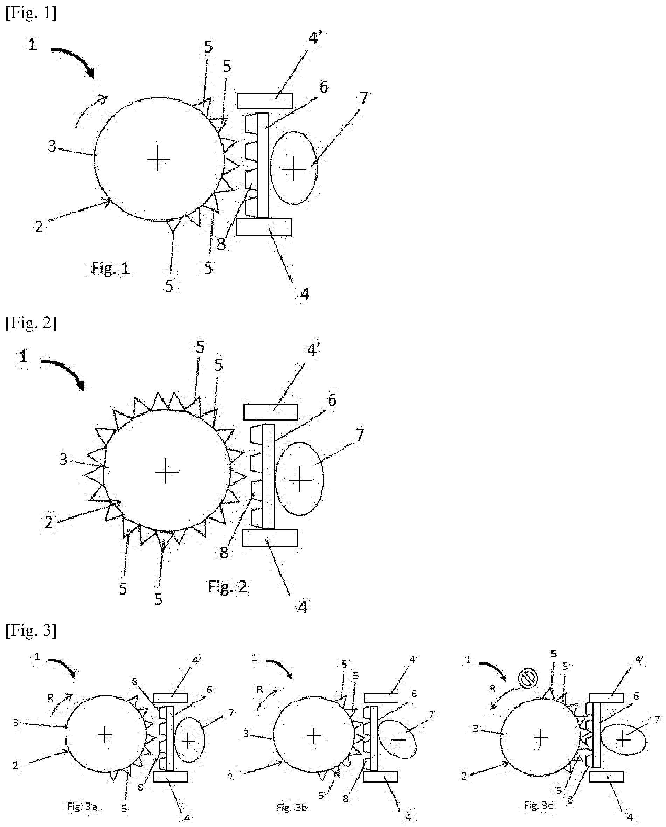

On a représenté sur les figures 1 à 3c un dispositif de serrage selon un premier mode de réalisation (figures 1 et 3a à 3c) et selon une variante de réalisation ([Fig.2]), désigné par la référence générale 1.

Selon ce premier mode de réalisation et sa variante, mais aussi selon des modes de réalisations et variantes non représentés, le dispositif de serrage 1 pour un système de freinage destiné à exercer un déplacement relatif entre des éléments de friction dudit système de freinage, comprend :
- un premier actionneur 2 du type à courant continu sans balais comprenant un rotor 3 et destiné à fournir une force de serrage aux éléments de friction (non représentés)
- un système de blocage de blocage en rotation du rotor 3, comprenant :
- des premiers moyens de blocage et des deuxièmes moyens de blocage de forme complémentaire, les premiers moyens de blocage étant situés sur la surface extérieure du rotor et les deuxièmes moyens de blocage étant situés en regard du rotor,
- un deuxième actionneur du type moteur électrique configuré pour exercer un déplacement relatif entre les premiers moyens de blocage et les deuxièmes moyens de blocage de sorte qu'ils coopèrent les uns avec les autres afin de bloquer le rotor (3) en rotation

Selon ce premier mode de réalisation et sa variante tels qu'illustrés aux figures 1 à 3c, les premiers moyens de blocage comprennent des dents 5 réparties radialement la surface extérieure du rotor 3 et les deuxièmes moyens de blocage comprennent des dents 8 réparties sur une face d'une crémaillère 6, ladite face étant en regard du rotor 3. Les dents 5 ont une forme complémentaire aux dents 8. Les dents 5 des premiers moyens de blocage sont réparties sur une partie ([Fig.1]) ou sur la totalité ([Fig.2]) de la circonférence du rotor 3. Une répartition sur la totalité de la circonférence du rotor 3 permet une plus grande réactivité du blocage en rotation du rotor 3 puisque les chances que les dents 5 et les dent 8 s'assemblent rapidement sont plus importantes.

Toujours selon premier mode de réalisation et sa variante, le système de blocage comprend en outre :
- une crémaillère 6 munies des dents 8 sur une de ses faces en regard du rotor 3,
- deux butées 4 et 4' en regard l'une de l'autre, la crémaillère 6 étant montée mobile entre les deux butées 4 et 4',
- une came 7, en contact avec la crémaillère 6, configurée pour permettre un premier mouvement relatif de la crémaillère 6 par rapport au rotor 3 du premier actionneur 2. La rotation de la came 7 est engendrée directement par le deuxième actionneur.

Le dispositif de serrage 1 selon l'invention comprend donc un premier actionneur 2 à courant continu sans balais, connu de l'homme du métier, et dont l'actionnement transmet, via une chaine cinétique non représentée, une force de serrage aux éléments de friction. Ces derniers enserrent ainsi un disque solidaire d'une roue du véhicule engendrant le freinage de ce dernier. Le premier actionneur 2 comprend un rotor 3 et un stator (non représenté). La surface externe du rotor 3 est pourvue, sur une partie ( [Fig.1]) ou sur la totalité ([Fig.2]) de sa circonférence, de dents 5 radialement réparties. La forme de ces dents 5 est configurée pour être complémentaire de celle des dents 8 de la crémaillère 6. Ainsi, lorsque ces dents 5 et 8 interagissent, le verrouillage en rotation du rotor 3 du premier actionneur 2 est assuré.

On décrit plus précisément le dispositif tel qu'illustré aux figures 1 et 3a à 3c. L''ensemble du système de blocage vise à assurer un blocage en rotation du rotor 3 du premier actionneur 2, lorsqu'un stationnement immobile du véhicule est nécessaire. Pour ce faire, ils comprennent une crémaillère 6 qui présente, sur sa face en regard du rotor 3, les dents 8 dont la forme est complémentaire aux dents 5 situées sur le rotor 3. La crémaillère 6 est montée mobile entre les deux butées 4 et 4' positionnées en regard l'une de l'autre. En d'autres termes, la crémaillère 6 est limitée en translation entre la butée inférieure 4 et la butée supérieure 4'. Les moyens de blocage comprennent, en outre, une came 7 en contact avec ladite crémaillère 6. Plus précisément, la came 7 est en contact direct et continu avec la face de la crémaillère 6 opposée à la face en regard du rotor 3. Enfin, ces moyens de blocage comprennent un deuxième actionneur (non représenté) destiné à mettre en rotation la came 7, via une chaine cinétique non représentée. Ce deuxième actionneur est de préférence un moteur à courant continu, dont la dimension et les caractéristiques (puissance, tension d'utilisation) sont moindres que celles du premier actionneur 2 du même type.

On va décrire le fonctionnement du dispositif de serrage 1 lorsqu'un stationnement immobile du véhicule est requis.

Dans une première configuration (figure 3a), faisant directement suite à une commande de la part de l'utilisateur souhaitant actionner le frein de parking du véhicule, le premier actionneur 2 est mis sous tension et effectue une rotation (dont le sens est illustré par la flèche R) de sorte à transmettre une force de serrage aux éléments de friction. A ce stade, la crémaillère 6 se situe en regard du rotor 3 de sorte que les dents 8 de la crémaillère 6 et les dents 5 du rotor 3 n'entrent pas en contact et n'interfèrent donc pas dans la rotation du rotor 3. Dans cette première configuration, la crémaillère 6 repose sur la butée 4 la plus basse.

Dans une deuxième configuration (figure 3b), lorsque la force de serrage transmise sous l'action du premier actionneur 2 est suffisante ou sur le point de l'être pour assurer un stationnement immobile sécurisé du véhicule, le deuxième actionneur est mis sous tension ce qui engendre la rotation de la came 7. Cette rotation de la came 7 entraine à son tour une translation de la crémaillère 6 en direction du rotor 3 du premier actionneur 2. Les dents 8 sur la crémaillère 6 et les dents 5 sur le rotor 3, dont les formes sont complémentaires, se rapprochent jusqu'à entrer en contact les unes avec les autres (figure 3c), solidarisant ainsi le rotor 3 et la crémaillère 6. Lorsque la mise sous tension du premier actionneur est stoppée, celui-ci effectue naturellement une rotation dans le sens inverse, sous l'action d'une force résultante des éléments de friction. Une telle rotation du rotor 3 dans le sens inverse est interdite grâce aux moyens de blocage puisque, à ce stade, la crémaillère solidaire du rotor 3 est déplacée jusqu'à venir en contact de la butée supérieure 4'. Ainsi, les déplacements de la crémaillère 6 et, par voie de conséquence, la rotation du rotor 3 sont interdits, de sorte que la force de serrage transmise aux éléments de friction est maintenue sans qu'une alimentation en continue de l'un des actionneurs ne soit nécessaire.

Dans une variante non représentée, le dispositif comprend avantageusement des moyens de rappel de la crémaillère 6 permettant ainsi de forcer son retour dans sa position initiale (dans laquelle les dents 8 et 5 sont éloignées les unes des autres) lorsque la came n'exerce plus une pression suffisante sur la crémaillère, ce qui permet d'assurer une répétabilité du dispositif de serrage.

Le procédé de freinage mis en œuvre par le dispositif selon l'invention fonctionne comme suit.

Lorsqu'un stationnement immobile du véhicule est requis, le premier actionneur 2 est mis sous tension de sorte à fournir une force de serrage aux éléments de friction.

Ensuite, la vitesse de rotation du rotor 3 du premier actionneur 2 est réduite.

Le deuxième actionneur est mis sous tension pour mettre en rotation la came 7 jusqu'à ce que les dents 8 sur la crémaillère 6 entrent en contact avec les dents 5 réparties radialement sur toute ou partie de la circonférence de la surface extérieure du rotor 3 du premier actionneur 2.

Enfin, les deux moteurs électriques sont mis hors tension.

Avantageusement, le dispositif de serrage 1 selon l'un des modes de réalisation ou l'une de leurs variantes possibles est situé au sein d'un boitier, et forme, avec ledit boitier et une unité de commande électronique, un système de freinage selon l'invention.

L'invention n'est pas limitée aux modes de réalisation présentés et d'autres modes de réalisation apparaîtront clairement à l'homme du métier. A titre d'exemple, un mode de réalisation non représenté dans lequel la crémaillère est montée immobile verticalement au sein du dispositif est envisageable. Ainsi, un tel dispositif ne nécessite pas la présence des butées. Dans un autre mode de réalisation non représenté, les deuxièmes moyens de blocage sont répartis sur la came et viennent en contact avec les premiers moyens de blocage lorsque la came est mise en rotation par le deuxième actionneur. Ainsi, un tel dispositif ne nécessite pas la présence des butées et de la crémaillère L'invention et l'étendue de la protection sont définies uniquement par les revendications annexées.

### Liste de références

1 : dispositif de serrage
2 : premier actionneur de type moteur électrique
3 : rotor
4 : butée inférieure
4' : butée supérieure
5 : dents des premiers moyens de blocage
6 : crémaillère
7 : came
8 : dents des deuxièmes moyens de blocage
R : sens de rotation du rotor 3

## Revendications

1. Dispositif de serrage (1) pour un système de freinage destiné à exercer un déplacement relatif entre des éléments de friction dudit système de freinage, le dispositif de serrage comprenant :
- un premier actionneur de type moteur électrique (2) comprenant un rotor (3) et destiné à fournir une force de serrage aux éléments de friction par rotation du rotor (3),
- un système de blocage (4, 4', 5, 6, 7, 8) en rotation du rotor (3), **caractérisé en ce que** le système de blocage (4, 4', 5, 6, 7, 8) comprend :
- des premiers moyens de blocage et des deuxièmes moyens de blocage de forme complémentaire, les premiers moyens de blocage étant situés sur la surface extérieure du rotor et les deuxièmes moyens de blocage étant situés en regard du rotor,
- un deuxième actionneur de type moteur électrique configuré pour exercer un déplacement relatif entre les premiers moyens de blocage et les deuxièmes moyens de blocage de sorte qu'ils coopèrent les uns avec les autres afin de bloquer le rotor (3) en rotation.

2. Dispositif (1) selon la revendication précédente, dans lequel le premier actionneur fournit une force de serrage aux éléments de friction par rotation du rotor (3) selon un premier sens de rotation, le système de blocage bloquant la rotation du rotor (3) dans un second sens de rotation, opposé au premier sens de rotation.

3. Dispositif (1) selon l'une quelconque des revendications précédentes, dans lequel le système de blocage comprend en outre une crémaillère (6) comprenant sur une de ses faces en regard du rotor les deuxièmes moyens de blocage.

4. Dispositif (1) selon la revendication précédente, dans lequel le système de blocage comprend en outre deux butées (4, 4') en regard l'une de l'autre, la crémaillère (6) étant montée mobile entre les deux butées (4).

5. Dispositif (1) selon la revendication 3 ou 4, dans lequel le système de blocage comprend en outre une came (7), en contact avec la crémaillère (6), configurée pour permettre un premier mouvement relatif de la crémaillère (6) par rapport au rotor (3) du premier actionneur (2), la came étant mise en rotation par le deuxième actionneur.

6. Dispositif (1) selon l'une quelconque des revendications 3 à 5, comprenant des moyens de rappel de la crémaillère (6) configurés pour permettre un deuxième mouvement relatif de la crémaillère (6) par rapport au rotor (3) du premier actionneur (2) de sens opposé au premier mouvement relatif.

7. Dispositif (1) selon l'une quelconque des revendications 3 à 6, dans lequel les premiers moyens de blocage et les deuxièmes moyens de blocage comprennent des dents (5, 8) de forme complémentaire.

8. Dispositif (1) selon l'une quelconque des revendications précédentes, dans lequel les premiers moyens de blocage sont répartis radialement sur tout ou partie de la circonférence de la surface extérieure du rotor (3), de préférence sur toute la circonférence de la surface extérieure du rotor.

9. Dispositif (1) selon l'une quelconque des revendications précédentes, dans lequel le premier actionneur et/ou le deuxième actionneur est un moteur à courant continu sans balais.

10. Système de freinage comprenant un dispositif de serrage (1) selon l'une quelconques des revendications précédentes, une unité de commande électronique et un boitier, le premier actionneur (2), le deuxième actionneur et l'unité de commande électronique étant situés au sein du boitier.

11. Procédé de freinage pour un dispositif de serrage (1) selon l'une quelconque des revendications 1 à 8, le procédé de freinage comprenant les étapes suivantes :
- mise sous tension du premier actionneur (2), le rotor (3) du premier actionneur étant mobile en rotation de sorte à fournir une force de serrage aux éléments de friction,
- réduction de la vitesse de rotation du rotor (3),
- mise sous tension du deuxième actionneur pour exercer un déplacement relatif entre les premiers moyens de blocage et les deuxièmes moyens de blocage de sorte qu'ils coopèrent les uns avec les autres afin de bloquer le rotor (3) en rotation,
- mise hors tension des deux actionneurs.

12. Procédé selon la revendication précédente, dans lequel le deuxième actionneur a une vitesse de rotation comprise entre 1 et 2 tr/min.

13. Procédé selon la revendication 11 ou 12, pour un dispositif de freinage selon la revendication 5, dans lequel la mise sous tension du deuxième actionneur engendre la mise en rotation de la came (7) jusqu'à ce que les dents (8) réparties sur la crémaillère (6) entrent en contact avec les dents (5) réparties radialement sur la surface extérieure du rotor (3) du premier actionneur (2).

## Patentansprüche

1. Klemmvorrichtung (1) für ein Bremssystem, dafür vorgesehen, eine relative Verschiebung zwischen Reibelementen des Bremssystems aufzubringen, wobei die Klemmvorrichtung umfasst:
- einen ersten Aktuator vom Typ Elektromotor (2), der einen Rotor (3) umfasst und dafür vorgesehen ist, den Reibelementen eine Klemmkraft durch Drehung des Rotors (3) bereitzustellen,
- ein Sperrsystem (4, 4', 5, 6, 7, 8) zum Sperren des Rotors (3) gegen Drehung, **dadurch gekennzeichnet, dass** das Sperrsystem (4, 4', 5, 6, 7, 8) umfasst:
- erste Sperrmittel und zweite Sperrmittel komplementärer Form, wobei die ersten Sperrmittel sich auf der äußeren Oberfläche des Rotors befinden und die zweiten Sperrmittel sich dem Rotor gegenüber befinden,
- einen zweiten Aktuator vom Typ Elektromotor, der dazu ausgebildet ist, eine relative Verschiebung zwischen den ersten Sperrmitteln und den zweiten Sperrmitteln aufzubringen, so dass sie miteinander zusammenwirken, um den Rotor (3) gegen Drehung zu sperren.

2. Vorrichtung (1) nach dem vorhergehenden Anspruch, wobei der erste Aktuator den Reibelementen eine Klemmkraft durch Drehung des Rotors (3) in einer ersten Drehrichtung bereitstellt, wobei das Sperrsystem die Drehung des Rotors (3) in einer zweiten, zu der ersten Drehrichtung entgegengesetzten Drehrichtung sperrt.

3. Vorrichtung (1) nach einem der vorhergehenden Ansprüche, wobei das Sperrsystem ferner eine Zahnstange (6) umfasst, die auf einer ihrer Flächen dem Rotor gegenüber die zweiten Sperrmittel umfasst.

4. Vorrichtung (1) nach dem vorhergehenden Anspruch, wobei das Sperrsystem ferner zwei Anschläge (4, 4') einander gegenüber umfasst, wobei die Zahnstange (6) zwischen den zwei Anschlägen (4) beweglich gelagert ist.

5. Vorrichtung (1) nach Anspruch 3 oder 4, wobei das Sperrsystem ferner einen Nocken (7), in Kontakt mit der Zahnstange (6), umfasst, der so ausgebildet ist, dass er eine erste relative Bewegung (6) in Bezug zu dem Rotor (3) des ersten Aktuators (2) gestattet, wobei der Nocken von dem zweiten Aktuator in Drehung versetzt wird.

6. Vorrichtung (1) nach einem der Ansprüche 3 bis 5, umfassend Mittel zum Rückstellen der Zahnstange (6), die so ausgebildet sind, dass sie eine zweite relative Bewegung der Zahnstange (6) in Bezug zu dem Rotor (3) des ersten Aktuators (2) in einer Richtung entgegengesetzt zu der ersten relativen Bewegung gestatten.

7. Vorrichtung (1) nach einem der Ansprüche 3 bis 6, wobei die ersten Sperrmittel und die zweiten Sperrmittel Zähne (5, 8) komplementärer Form umfassen.

8. Vorrichtung (1) nach einem der vorhergehenden Ansprüche, wobei die ersten Sperrmittel über den gesamten oder einen Teil des Umfangs der äußeren Oberfläche des Rotors (3) radial verteilt sind, bevorzugt über den gesamten Umfang der äußeren Oberfläche des Rotors.

9. Vorrichtung (1) nach einem der vorhergehenden Ansprüche, wobei der erste Aktuator und/oder der zweite Aktuator ein bürstenloser Gleichstrommotor ist.

10. Bremssystem, umfassend eine Klemmvorrichtung (1) nach einem der vorhergehenden Ansprüche, eine elektronische Steuereinheit und ein Gehäuse, wobei sich der erste Aktuator (2), der zweite Aktuator und die elektronische Steuereinheit im Inneren des Gehäuses befinden.

11. Bremsverfahren für eine Klemmvorrichtung (1) nach einem der Ansprüche 1 bis 8, wobei das Bremsverfahren die folgenden Schritte umfasst:
- Einschalten des ersten Aktuators (2), wobei der Rotor (3) des ersten Aktuators drehbeweglich ist, so dass er den Reibelementen eine Klemmkraft bereitstellt,
- Reduzieren der Drehzahl des Rotors (3),
- Einschalten des zweiten Aktuators, um eine relative Verschiebung zwischen den ersten Sperrmitteln und den zweiten Sperrmitteln zu bewirken, so dass sie miteinander zusammenwirken, um den Rotor (3) gegen Drehung zu sperren,
- Ausschalten der zwei Aktuatoren.

12. Verfahren nach dem vorhergehenden Anspruch, wobei der zweite Aktuator eine Drehzahl zwischen 1 und 2 U/min hat.

13. Verfahren nach Anspruch 11 oder 12 für eine Bremsvorrichtung nach Anspruch 5, wobei das Ausschalten des zweiten Aktuators dazu führt, dass der Nocken (7) in Drehung versetzt wird, bis die über die Zahnstange (6) verteilten Zähne (8) mit den Zähnen (5) in Kontakt kommen, die über die äußere Oberfläche des Rotors (3) des ersten Aktuators (2) radial verteilt sind.

## Claims

1. Clamping device (1) for a braking system intended to cause the friction elements of said braking system to be displaced relative to one another, the clamping device comprising:
- a first actuator of electric motor type (2) comprising a rotor (3) and intended to supply a clamping force to the friction elements by rotation of the rotor (3),
- a system (4, 4', 5, 6, 7, 8) for locking the rotor (3) against rotation, **characterised in that** the locking system (4, 4', 5, 6, 7, 8) comprises:
- first locking means and second locking means of complementary shape, the first locking means being located on the outer surface of the rotor and the second locking means being located opposite the rotor,
- a second actuator of electric motor type configured to cause the first locking means and the second locking means to be displaced relative to one another such that they cooperate with each other to lock the rotor (3) against rotation.

2. Device (1) according to the preceding claim, wherein the first actuator supplies a clamping force to the friction elements by rotation of the rotor (3) in a first direction of rotation, the system locking the rotor (3) against rotation in a second direction of rotation, opposite the first direction of rotation.

3. Device (1) according to any one of the preceding claims, wherein the locking system further comprises a rack (6) comprising the second locking means on one of its sides facing the rotor.

4. Device (1) according to the preceding claim, wherein the locking system further comprises two stops (4, 4') facing each other, the rack (6) being movably mounted between the two stops (4).

5. Device (1) according to claim 3 or 4, wherein the locking system further comprises a cam (7), in contact with the rack (6), configured to allow a first relative movement of the rack (6) with respect to the rotor (3) of the first actuator (2), the cam being rotated by the second actuator.

6. Device (1) according to any one of claims 3 to 5, comprising means for returning the rack (6) configured to allow a second relative movement of the rack (6) with respect to the rotor (3) of the first actuator (2) in a direction opposite to the first relative movement.

7. Device (1) according to any one of claims 3 to 6, wherein the first locking means and the second locking means comprise teeth (5, 8) of complementary shape.

8. Device (1) according to any one of the preceding claims, wherein the first locking means are distributed radially around all or part of the circumference of the outer surface of the rotor (3), preferably around the whole circumference of the outer surface of the rotor.

9. Device (1) according to any one of the preceding claims, wherein the first actuator and/or the second actuator are/is a brushless direct current motor.

10. Braking system comprising a clamping device (1) according to any one of the preceding claims, an electronic control unit and a box, the first actuator (2), the second actuator and the electronic control unit being located in the box.

11. Braking method for a clamping device (1) according to any one of claims 1 to 8, the braking method comprising the following steps:
- powering up the first actuator (2), the rotor (3) of the first actuator being movable in rotation so as to supply a clamping force to the friction elements,
- reducing the speed of rotation of the rotor (3),
- powering up the second actuator to cause the first locking means and the second locking means to be displaced relative to one another such that they cooperate with each other to lock the rotor (3) against rotation,
- powering down the two actuators.

12. Method according to the preceding claim, wherein the speed of rotation of the second actuator is between 1 and 2 rpm.

13. Method according to claim 11 or 12, for a braking device according to claim 5, wherein powering up the second actuator rotates the cam (7) until the teeth (8) distributed along the rack (6) come into contact with the teeth (5) distributed radially on the outer surface of the rotor (3) of the first actuator (2).
